# EUROPEAN PATENT APPLICATION

(11) **EP 1 710 212 A1**
(43) Date of publication of application: **11.10.2006**
(21) Application number: 05290757.3
(22) Date of filing: 06.04.2005
(51) Int. Cl.: C03B 17/06, C03B 13/00, C03B 40/04

(54) **process and device for manufacturing flat sheets of a glass-based material**

(71) Applicant: Corning Incorporated, Corning, NY 14831 (US)
(72) Inventor: Fredholm, Allan M., 77850 Hericy (FR); Gille, Claude, 77570 Bougligny (FR); Pierron, Christophe, 77210 Avon (FR); Tellier, Xavier, 89690 Cheroy (FR)
(74) Representative: Boon, Graham Anthony

(57) **Abstract**

The present invention relates to a process for manufacturing flat sheets of a glass-based material and to a device associated with the process. The process comprises passing a stream of the material (10) through a reservoir (24) comprising a hollow central portion defined and delimited by the porous walls (12) of the reservoir, in which the material accumulates and through which it flows, in an almost steady state and with a limited residence time, any contact between the material and the walls being prevented, the hollow central part of the reservoir having a substantially rectangular, horizontal cross-section whose width decreases continuously from a maximum width D to a minimum width D', in the direction of flow of the material, over at least a portion of the flow path of the material. The drawn glass has a viscosity less than about 10⁷ poise at an outlet of the reservoir (24).

## Description

### BACKGROUND OF THE INVENTION

### FIELD OF THE INVENTION

The present invention relates to a process for manufacturing flat sheets of a glass-based material. It further relates to an apparatus for manufacturing flat sheets of a glass-based material.

### TECHNICAL BACKGROUND

There is an increasing demand for flat sheets, especially precision flat sheets, i.e. of high surface quality, which are made of a glass-based material such as a special glass or a glass-ceramic.

A so-called "rolling process" is known for the manufacture of flat sheets of a glass-based material. In this process the glass-based material, in the pasty state, is drawn and rolled between rollers, which does not allow flat sheets of high surface quality to be obtained.

Another known process for obtaining flat sheets of a glass-based material is the so-called "float process". In this process the liquid material is delivered onto a bath of liquid tin. The surface of the flat sheet is then contaminated with tin and the flat sheet exhibits surface defects which are not acceptable for flat sheets of high surface quality.

The so-called "fusion draw process" makes it possible to obtain flat sheets of high surface quality, but glass-based materials whose liquidus viscosities are below about 100,000 poises are difficult to use.

For applications such as display screens, it is imperative for the flat sheet to have certain properties such as an absence of surface contamination, for example by tin, a high surface quality, and consistent dimensions, such as thickness of the sheet.

### SUMMARY

In one broad aspect, the invention proposes a method for manufacturing flat sheets of a glass-based material comprising flowing the glass-based material into and through a reservoir between two porous walls, the reservoir having a vertical length, a horizontal width and including a gap between the walls which varies along the length of the reservoir, the material being separated from the walls by a gas film, drawing the glass based material in a sheet from an outlet of the reservoir and wherein the drawn glass-based material has a viscosity less than about 500,000 poise at the reservoir outlet. Preferably the viscosity of the drawn glass-based material at the outlet of the reservoir is less than about 100,000 poise.

The material for manufacturing flat sheets by the method of the invention is preferably glass or a glass-ceramic, however, the method of the invention is of particular value in that it can be carried out with any type of glass-based material. It has a certain universality as regards the liquidus viscosity of the material in question. In particular, it can be carried out with materials whose liquidus viscosity is below 40,000 poises.

In one embodiment, the reservoir gap varies across the width of the reservoir. Preferably, the gap is larger at the vertical side edges (ends) of the reservoir than at a corresponding medial portion between the walls.

A viscosity of the sheet of glass-based material at the outlet of the reservoir is preferably between less than about 10⁷ poises; more preferably less than about 500,000 poise; and most preferably between about 25,000 and 500,000 poise. At such viscosities, the sheet of glass-based material exiting the reservoir may advantageously continue to be worked such that the thickness of the sheet may continue to decrease as it passes from the reservoir to the second set of rollers. Practicing the method of the invention can produce glass-based sheets having a thickness less than about 3 mm, preferably less than about 1 mm. Advantageously, the method of the invention is capable of producing glass-based sheets having a thickness wherein the glass sheet becomes flexible, e.g. less than 150 µm.

In accordance with an embodiment of the invention, the flow rate of the material through the reservoir is such that the material has a very short residence time within the reservoir, typically less than about 1 minute. Preferably, the flow rate of the material varies across the width of the reservoir; more preferably the flow rate of the material adjacent the vertical edges of the reservoir is less than the flow rate of the material at a medial position of the reservoir. Thus the method can be capable of overcoming adverse flow characteristics at the extremes of the reservoir width. Adverse flow characteristics may also be overcome by controlling a temperature of the stream of material over at least part of a flow path through the reservoir by heating, cooling or a combination of heating and cooling of the material.

In some instances it may be desirable to sculpture the glass-based sheet after it leaves the reservoir, the sculpturing being within the scope of those skilled in the art.

In another broad aspect of the invention, an apparatus for manufacturing flat sheets of a glass-based material is disclosed. The apparatus according to an embodiment of the present invention comprises a reservoir comprising two walls, the walls defining a gap within which the glass-based material can accumulate and through which it can flow, the gap varying over at least a portion of a vertical length of the reservoir, and wherein the reservoir is open at the sides thereof.

In one embodiment, the apparatus according to the present invention preferably has at least one longitudinal side wall inclined at an angle of between 10° and 45° relative to a vertical axis. More preferably, both the longitudinal side walls of the reservoir are inclined relative to the vertical axis, and most preferably, both walls are inclined at the same angle relative to a vertical axis.

The walls preferably comprise a porous material with an open porosity and may also comprise a leaktight envelope surrounding the reservoir, which may be fed with a pressurized gas. The pressurized gas may be heated or cooled to control the temperature of the walls.

In one advantageous variant, contact between the material and the walls is prevented by a film of gas between the walls and the flowing material. The film of gas may be provided, for example, by maintaining a gas under pressure upstream of the walls, in which case the walls consist of a material with open porosity. In this case the apparatus of the invention advantageously comprises a leaktight envelope which surrounds at least a portion of each wall of the reservoir and which is fed with the pressurized gas, the pressurized gas flowing through the porous walls and generating the film of gas between the walls and the flowing glass-based material.

Alternatively, the walls may contain gas passages within the structure of the walls for enabling the pressurized gas to be delivered to the interior of the walls. The passages preferably increase in size in a vertical direction from the top of the walls to the bottom of the walls. Preferably, the passages are less than about 5 mm from a surface of the walls.

Preferably the apparatus of the invention also comprises sets of edge rollers, for reducing the sheet to the desired dimensions after it leaves the reservoir. The apparatus may also include auxiliary rollers, in addition to the edge rollers, mounted outside the reservoir such that an axis of rotation of the rollers is no greater than about 10 mm below an outlet of the reservoir.

In another embodiment, the apparatus may comprise one or more roller covering the whole width of the sheet leaving the reservoir for sculpturing the sheet.

The invention will be understood more easily and other objects, characteristics, details and advantages thereof will become more clearly apparent in the course of the following explanatory description, which is given, without in any way implying a limitation, with reference to the attached Figures.

### BRIEF DESCRIPTION OF THE DRAWINGS

FIG. 1 schematically shows a side cut-away view of the one embodiment of the invention for manufacturing flat sheets of a glass-based material, showing the porous walls inclined from a vertical axis to form a reservoir, and a flow of glass-based material into the reservoir.

FIG. 2 shows a perspective view of the inclined walls, and another view of the reservoir therebetween.

FIG. 3 depicts a front view of the apparatus according to an embodiment of the present invention, showing the auxiliary rollers, edge rollers, and the head of glass-based material in the reservoir.

FIG. 4 is a close-up side cross sectional view of the glass-based material adjacent a wall of the reservoir, indicating the gas film separating the gas-based material from the wall, and the flow of pressurized gas through the porous wall.

FIG. 5 is a side cross sectional view of an apparatus according to an embodiment of the present invention including a flow of glass-based material through the apparatus, including edge rollers, and also showing the head of glass-based material.

FIG. 6 is a cross sectional view of one wall of an apparatus according to an embodiment of the present invention showing passages within the structure of the wall into which a film forming gas is injected, and an envelope surrounding at least a portion of the wall for flowing a temperature regulating fluid.

FIG. 7a is a top down view of a reservoir according to an embodiment of the present invention in wherein the walls which form the reservoir are separated by a gap which varies vertically along a length of the walls.

FIG. 7b is a top down view of a reservoir according to an embodiment of the present invention in wherein the walls which form the reservoir are separated by a gap which varies vertically along a length of the walls and which also varies along a width of the walls.

FIG. 7c is a top down view of one wall of the reservoir illustrated in FIG. 7b, showing a curvature of the reservoir-side of the wall responsible for the horizontally varying gap.

FIG. 8 is a front view of an embodiment of the inventive apparatus wherein a portion of the glass-based material flowing through the reservoir extends beyond the side edges of the reservoir walls.

FIG. 9 shows the distance separating a pair of auxiliary rollers.

FIG. 10 illustrates the position of an auxiliary roller relative to a side edge of a reservoir wall

FIG. 11 is a cross sectional view of another embodiment of an apparatus according to the present invention wherein the reservoir walls comprise cylinders.

### DETAILED DESCRIPTION

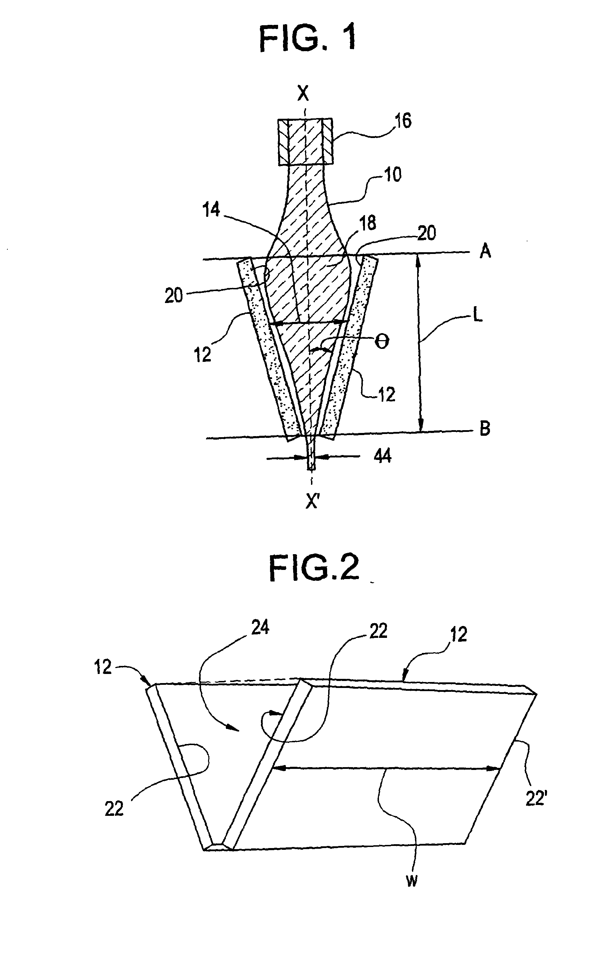

As seen in FIGS. 1 - 3, one embodiment of the present invention comprises the passage of a glass or glass-ceramic (hereinafter glass-based) material **10** between two walls **12** defming a gap, generically designated as gap **14** therebetween. FIG. 1 shows a side cross sectional view of a portion of an apparatus for drawing glass sheet according to an embodiment of the invention. The glass-based material **10** flows from delivery system **16** and accumulates between walls **12,** forming a head **18** of glass based material between walls **12.** As used herein, the term head refers to the volume of glass based material which is accumulated between the walls as a reserve. The glass-based material thereafter flows from an outlet at the bottom of the walls without contact between glass-based material **10** and walls **12.** Each wall **12** forms an angle θ with vertical axis X-X'. The walls extend in a generally vertical direction from a top position or level, designated by reference character A, to a bottom position or level, designated by reference character **B.** The distance between opposing surfaces of each wall defines gap **14.**

As shown by FIG. 1, the interior glass-side surface **20** of the walls between the upper bound of position A and the lower bound of position **B** (i.e. within distance **L**) generally forms a wedge shape. FIG. 2 depicts a perspective view of walls **12,** illustrating that the walls further comprise a width **W,** wherein the width **W** terminates at side edges **22, 22'** of each wall. The side edges at one end of walls **12** are designated as **22** and the side edges at the opposite end of walls **12** are designated as **22'.** Thus, each wall extends a distance **W** between side edge **22** and side edge **22'.** The generally wedge-shaped volume occupying the space between walls **12** (within gap **14)** and extending across width **W** of walls **12** and along length **L** from the top **A** of walls **12** to the bottom **B** of walls **12** shall hereinafter be referred to as reservoir **24.** Glass-based material **10** flows into reservoir **24** at level **A** at the top of the walls, and flows out of reservoir **24** at level **B** at the bottom of the walls. In one embodiment, discussed later, the flow of glass-based material **10** may extend horizontally beyond side edges **22, 22'** such that a portion of glass-based material flows outside reservoir **24** before reaching outlet level **B.** In the embodiment depicted in FIG. 1, the glass-based material flows completely within reservoir **24,** i.e. between edges **22, 22',** and does not extend in a horizontal direction beyond edges **22, 22'.**

Although walls **12** are shown to be planar, the walls may be concave, convex, or other shapes depending upon application. In one embodiment described herein, the walls comprise porous cylinders.

Reservoir gap **14** preferably varies vertically along a flow path of glass-based material **10** in a downward direction along axis X-X'; more preferably, gap **14** decreases along at least a portion of the flow path of material **10.** The decrease in gap **14** along the flow path of glass-based material **10** is advantageously obtained by translating at least one of the walls **12,** or inclining at least one of the walls **12** at an angle θ of between about 10° and 45° relative to the vertical axis X-X'; more preferably at an angle θ of between about 10° and 30°; and most preferably at an angle θ of between about 15° and 30°. More preferably, both walls **12** are inclined at the same angle relative to vertical axis X-X'. As depicted in FIG. 1, gap **14** preferably decreases along the flow path of material **10** from a maximum at reservoir inlet position A to a minimum at reservoir outlet position **B.**

The function of reservoir **24** is to receive the stream of glass-based material **10** from delivery system **16** in the liquid, semi-liquid or pasty state and to deliver a sheet of glass-based material **10** in a semi-solid state at outlet position **B.** Delivery system **16** may be comprised of platinum or a platinum alloy, making it possible to deliver glass-based material **10** at high temperature, e.g. on the order of 1400°C to 1500°C, so hard glasses, which have a low liquidus viscosity (for example as low as 1000 poises), and glass-ceramics can be treated. However, delivery system **16** may also be made of other refractory materials. For example, delivery system **16** may comprise a ceramic material.

In a preferred embodiment, delivery system **16** comprises an overflow trough wherein the glass overflows both sides of a triangularly-shaped trough. Overflow troughs, or as they have come to be known in the art, isopipes, are described, for example, in U.S. Patent No. 3,338,696 to Dockerty, the contents of which are included in their entirety herein by reference. The two glass flows, one on either side of the isopipe body, meet at the bottom apex of the isopipe, therefore forming a flow of glass-based material having pristine outside surfaces. The pristine outside surfaces formed by a delivery system comprising an isopipe advantageously improve the surface quality of the glass-based material delivered by the present invention by supplying reservoir **24** with a flow of glass-based material having a high quality surface. Preferably, the residence time of the glass-based material within reservoir **24** is less than about one minute.

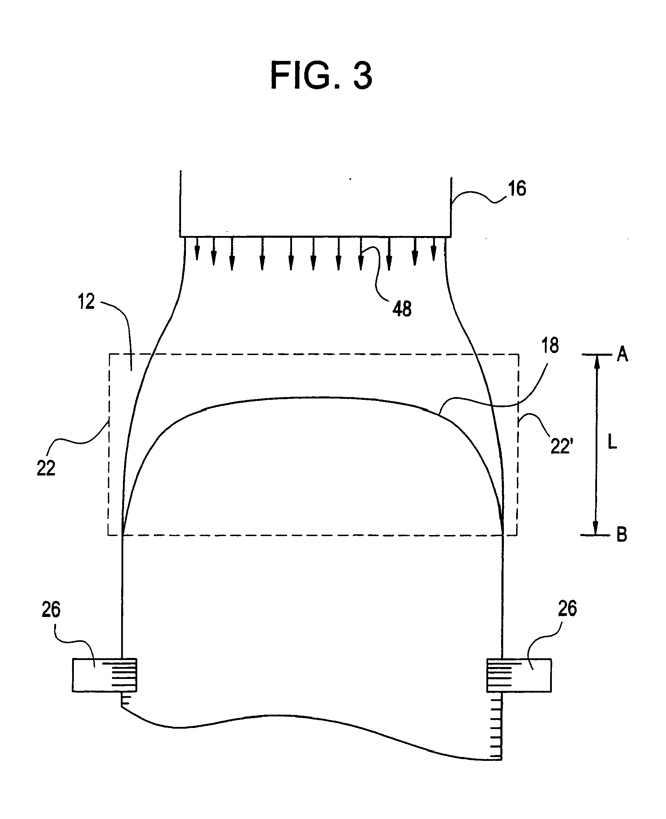

To maintain the pristine nature of the glass-based material flowing into and through reservoir **24,** it is desirable that contact between the glass-based material and the reservoir walls be avoided. Contact with the reservoir walls may result in a transfer of contaminants from the walls to the glass-based material and/or the creation of imperfections in the surface of the glass. However, because glass-based material **10** remains "untouched" (contact-free) as it passes through reservoir **24,** a high-quality surface finish can be obtained, which is particularly important for use in display applications. Moreover, no surface contamination takes place. FIG. 3 shows a frontal view of the embodiment of FIG. 1 and includes a view of edge rollers **26.**

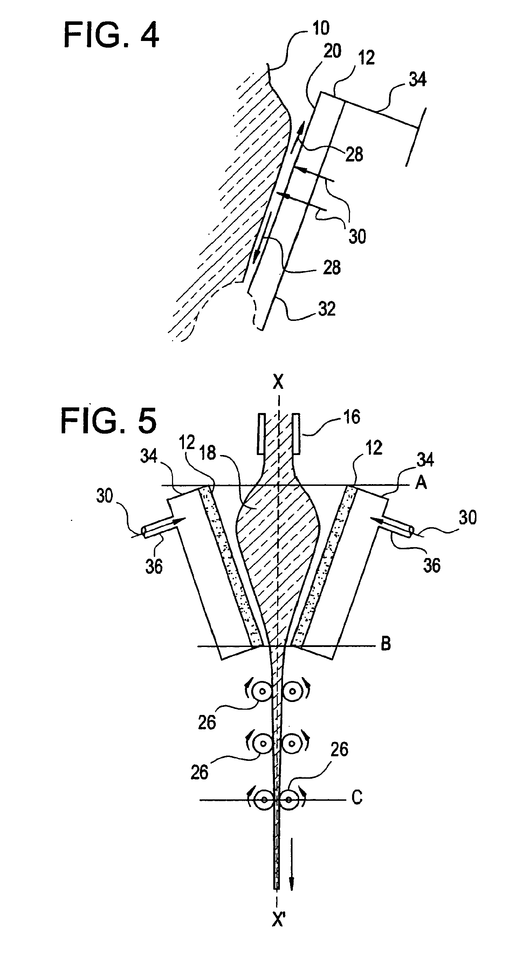

A preferred method for preventing contact between walls **12** of reservoir **24** and the stream of glass-based material **10** accumulating in and flowing through reservoir **24** is to provide a gas film between the internal surfaces of reservoir walls **12** and glass-based material **10.** Such a configuration is best illustrated in FIG. 4 wherein a portion of the apparatus according to the present embodiment is illustrated. Gas film **28** may be generated by providing a pressurized gas, shown by arrows **30,** on side **32** of the walls opposite glass-side surface **20,** the walls being porous. Gas **30** flows through the pores of the porous walls. The gas is preferably air, but may be an inert gas, such as nitrogen or helium, or a combination of inert gases. In one preferred embodiment of the invention, reservoir walls **12** are comprised of graphite. Other suitable materials include porous stainless steel, a porous nickel alloy or a porous ceramic. As shown in Figure 5, it is advantageous to provide a leaktight envelope **34** around walls **12.** In this embodiment gas **30** is injected under pressure into leaktight envelope **34** through inlet **36,** and thereafter flows through the pores in reservoir walls **12** from side **32** to side **20** and issues from side **20** to create gas film **28** between the reservoir walls and glass-based material **10** flowing through the reservoir.

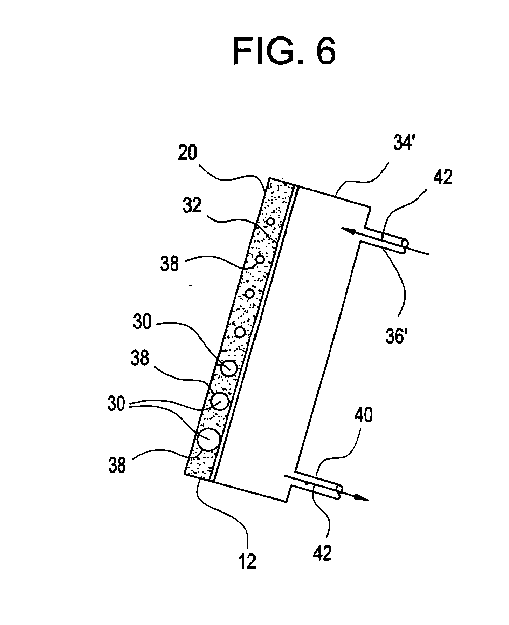

As shown in FIG. 6, the gas film may also be created by injecting pressurized gas **30** into ducts, or passages **38,** extending through the interior of the reservoir walls. Passages **38** may be the same size or passages **38** may vary in size. It is preferred that passages **38** run horizontally along width **W** within walls **12.** Preferably passages **38** increase in diameter in a direction of flow of the glass-based material, i.e. vertically, from top to bottom, with the lower passages having a generally larger diameter than the upper passages. Passages **38** are typically within less than about 5 mm of reservoir-side wall surface **20;** more preferably less than about 4 mm; and most preferably between about 4 mm and 3 mm of the reservoir-side surface of the wall. Preferably, passages **38** are closer to surface **20** of walls **12** near the exit (i.e. outlet level **B)** of the reservoir than near the top, inlet position **A,** of the reservoir. Passages 38 are pressurized with gas **30.** Gas **30** then exits wall **12** through pores in surface **20,** creating the desired gas film **28** between the glass-side surfaces **20** of reservoir walls **12** and glass-based material **10** flowing through reservoir **24.** The gas may be air; more preferably an inert gas such as, for example, nitrogen. Similar to the embodiment shown in FIG. 1 and 4, each wall **12** containing passages **38** according to the present embodiment may advantageously comprise envelope **34'** around reservoir walls **12.** As shown in FIG. 6, envelope **34'** typically includes inlet **36'** and outlet **40** through which a temperature regulating fluid **42** may be flowed into and out of the envelope, respectively, thereby permitting cooling, or if need be, heating of reservoir walls **12.** Temperature regulating fluid **42** may be chilled or heated to control the temperature of the walls. The temperature regulating fluid may comprise a gas, such as air or an inert gas, or the temperature regulating fluid may comprise a liquid, such as water. Methods for chilling or heating a temperature regulating fluid are well known. Preferably, envelope **34'** extends across wall surface **32** so that there is no intermixing between gas **30** and temperature regulating fluid **42.**

The gas film thickness between reservoir wall surface **20** and the glass flow within the reservoir may be controlled according to the present embodiment by increasing or decreasing the number of gas passages **38,** by adjusting the pressure of the gas delivered to the passages, or by the distance between passages **38** and glass side **20** of the reservoir walls. For example, the gas film thickness may be increased by increasing the pressure of the gas supplied to the passages, or by decreasing the distance between passages **38** and the glass-side surface **20** of the walls. Similarly, the gas film thickness according to the previous embodiment may be controlled, for example, by increasing the pressure of gas **30** delivered to envelope **34.**

The desired dimensions of the sheet of glass-based material may be obtained by drawing the sheet leaving reservoir **24,** such as, for example, by means of edge rollers located below outlet level **B** of reservoir **24** between which the edges of the sheet of glass-based material pass. At least one set of edge rollers **26** (FIGS. 3 and 5) may be positioned below (downstream relative to the direction of flow of the glass-based material) outlet level **B** of the reservoir. By "set" what is meant is two pair of opposing, counter-rotating rollers, a first pair of edge rollers at one edge of the glass sheet, and another, second pair of edge rollers at the opposite edge of the sheet. Edge rollers **26** pull the glass flow by applying a downward force to the glass, and may also be used to guide and size the sheet to a desired width and thickness.

The edge rollers are driven by motors (not shown) which rotate the edge rollers in opposition, thus applying the pulling force to the sheet of glass-based material, the pulling force being a function of, inter alia, the vertical viscosity gradient of the sheet of glass-based material being drawn, the downward draw speed of the sheet, the angle θ of the reservoir walls from vertical, the temperature of the reservoir walls (particularly the temperature at the glass-side surfaces **20),** and the temperature of the edge rollers. The pulling force may be varied, for example, by changing the temperature of reservoir walls **12,** such as by cooling the walls as previously described, thereby changing the viscosity gradient. It should be noted that a plurality of edge roller sets may be used to pull and elongate the glass sheet. The edge rollers typically are knurled, toothed, or otherwise equipped with surfaces that aid in drawing the glass sheet, but which may therefore damage the edges of the sheet of glass-based material 10. The manufacturing process of the invention preferably includes a step for cutting off or otherwise removing these damaged edges in order to obtain a sheet of glass-based material with the desired high surface quality. Other edge rollers (not shown) having smooth surfaces may also be employed, typically below the knurled edge rollers relative to the direction of flow of glass-based material, for guiding the glass sheet.

Advantageously, in contrast to prior art methods which employ non-contact walls, the sheet of glass-based material exiting reservoir **24** at outlet position **B** according to the present invention has preferably not reached a viscosity wherein dimensions of the sheet may not be varied, such as, for example, the width or thickness of the sheet. In other words, the viscosity of the sheet leaving the reservoir according to the present invention is sufficiently low that width or thickness of the sheet may be varied after leaving reservoir **24** at outlet position **B.** In particular, it is preferable that thickness **44** of the sheet (FIG. 1) exiting reservoir **24** is further reduced by passing the sheet between edge rollers **26,** as previously described. Successive sets of edge rollers draw the glass-based material exiting reservoir **24** increasingly thinner until the sheet has attained a predetermined permanent thickness **46** at position C (FIG. 5) after the sheet has passed through at least one set of edge rollers **26.** Although FIG. 5 depicts 3 sets of edge rollers between position **B** and position **C,** more than three sets of edge rollers may be used, or less than three sets of edge rollers may be used, as needed for the desired thickness. Preferably, the viscosity of the glass-based sheet exiting the reservoir at position **B** is less than about 10⁷ poises, more preferably less than about 500,000 poises; and most preferably between about 25,000 and about 500,000 poises. A viscosity less than about 10⁷ poises provides additional flexibility to the inventive method, and facilitates the manufacture of glass-based sheets having a thickness preferably less than about 3 mm by passing the glass sheet through one or more sets of edge rollers. A thickness more preferably less than about 1 mm may be attained. Glass-based sheets having a thickness less than 150 µm may advantageously be produced using the inventive method and the apparatus disclosed herein. A sheet thickness less than about 150 µm may allow the solidified sheet to be wound into a roll, such as by winding the sheet onto a roll or cylindrical form. The sheets of glass-based material having a thickness **46** less than about 150 µm may be used, for example, to manufacture flexible displays. To protect the glass sheet, the sheet may be coated with a suitable coating, such as a polymer (e.g., an acrylate) if desired.

Where appropriate, particularly for the production of glass-ceramic cook tops, the inventive method may also comprise passing the sheet of glass-based material between appropriate rollers to give the flat sheets a sculptured surface. For this purpose the device of the invention may comprise, in addition to or in place of edge rollers **26,** imprinting rollers (not shown) which extend across the entire width of the sheet leaving reservoir **24.** Such imprinting rollers may be used to imprint predetermined patterns on the glass surface.

By appropriate choice of the dimensions of the substantially rectangular, horizontal cross-sections of reservoir **24** from inlet **A** to outlet position **B** of the reservoir, and by controlling the temperature of walls **12** and the flow rate of glass-based material **10,** a gradual cooling of the glass-based material is obtained so as to give the desired viscosity at reservoir outlet position **B.**

As glass-based material **10** is flowed through reservoir **24** and a substantially rectangular cross section of flow of glass-based material **10** is flowed out of reservoir **24,** it is desirable that head **18** of glass-based material **10** be accumulated within reservoir **24.** However, the behavior of glass-based material **10** as it flows through reservoir **24** is such that a flow of glass-based material **10** which is spread evenly across width **W** of reservoir **24** may cause the flow of glass-based material **10** from reservoir outlet position **B** to be unstable, resulting in difficulty maintaining a constant thickness of the material at reservoir outlet position **B.** It is thought that such a phenomenon is a result of surface tension effects, or inhomogeneous cooling across the width of the glass-based material. Such effects have an impact upon the resistance (impedance) experienced by the material flow, and which impedance may differ significantly between regions of the flow near side edges **22, 22'** of walls **10** when compared with the glass-based material flow at a medial position along width **W.** Thus, the pressure drop along the flow path of the glass-based material may be higher along the outside portions of the flow than in the middle of the flow. It is therefore desirable to compensate for the differences in impedance to the flow across the width of the flow, thereby at least equalizing the vertical pressure drop across the width of the flow.

Several methods may be used to compensate for this difference in impedance. In one embodiment of the present invention, delivery system **16** is adapted to provide a reduced flow of material **10** to a region of reservoir **24** adjacent side edges **22, 22'** of walls **12** compared to the flow of material **10** delivered to a medial portion of the reservoir. (Walls **12** are indicated by phantom - or dashed - lines in FIG. 3) That is, the flow of glass-based material **10** to the center of reservoir **24** is made greater than the flow rate of glass-based material **10** delivered to the edges of reservoir **24.** It is preferable in this instance that the flow rate of glass-based material is substantially constant across the width of the delivery system, with the exception being the outside edges of the flow, wherein the flow rate is greater adjacent edges **22, 22'** than within the medial portion of the flow. This is illustrated in FIG. 3 by flow lines **48** which illustrate the relative flow rate of glass based material across the width of delivery system **16,** and which glass-based material is delivered to reservoir **24.** The length of each flow line represents the relative flow, with a longer line indicating a greater flow than a shorter line. Preferably, the flow of glass-based material issuing from the outside edges of the flow delivery system is such that the flow between walls **12** at side edges **22, 22'** of the walls is between about 10% and 30% of the flow at a medial position between the walls; more preferably about 20%; and most preferably about 30%. Preferably, the flow within 200 mm of side edges **22, 22'** of the walls is approximately 10% to 30% less than the flow at a medial position between the walls.

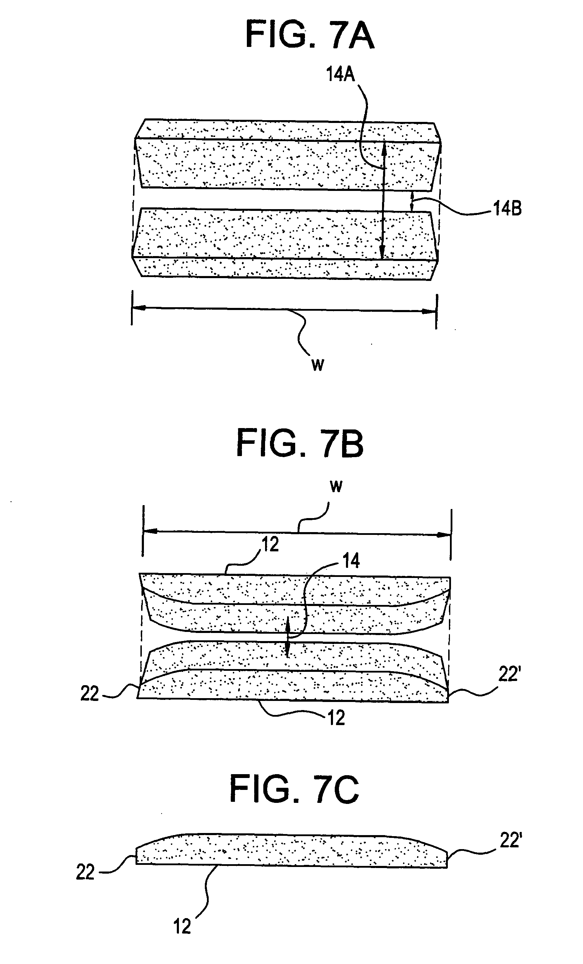

In another embodiment, gap **14** may vary across reservoir width **W** such that gap **14** is larger adjacent side edges **22, 22'** of walls **12** than at a medial position of width **W.** This can be more clearly seen by referring to FIG. 7a-7c. FIG. 7a shows a top view of walls **12** wherein gap **14** varies vertically from the top of the walls (where generic gap **14** is designated as **14A** at the top of the walls) to the bottom of the walls (designated as **14B).** Gap **14A** and gap **14B** are different, but nonetheless each gap is constant across width **W.** On the other hand, FIG. 7b shows walls **12** wherein the gap between the walls varies horizontally across at least a portion of width **W.** For clarity, a top down view of a single wall from FIG. 7b is shown in FIG. 7c. As a result of the larger gap adjacent the side edges of walls **12** in FIG. 7b, resistance to the flow of glass-based material **10** adjacent the side edges, where gap **14** is greatest, is less than the flow of the material at a medial position between the walls where the gap is smaller. Preferably, gap **14** is about 0.5 mm to about 1 mm larger at the side edges of walls **12** than at a medial position across the width of the reservoir. The widened gap should extend inward from side edges **22, 22'** toward the center of the walls at least about 10 mm, more preferably at least about 30 mm. It is not necessary that the gap distance be vertically uniform within the above mentioned region. For example, gap **14** may be constant horizontally across the top (inlet) of the reservoir, but vary horizontally across the bottom (outlet) of the reservoir. Gap **14** preferably varies such that the gap at the edges of the reservoir is greater adjacent side edges **22, 22'** than at a medial position within the reservoir, and at least across the bottom of the reservoir. Preferably, variation in gap **14** should be gradual rather than exhibit a sharp, distinct transition.

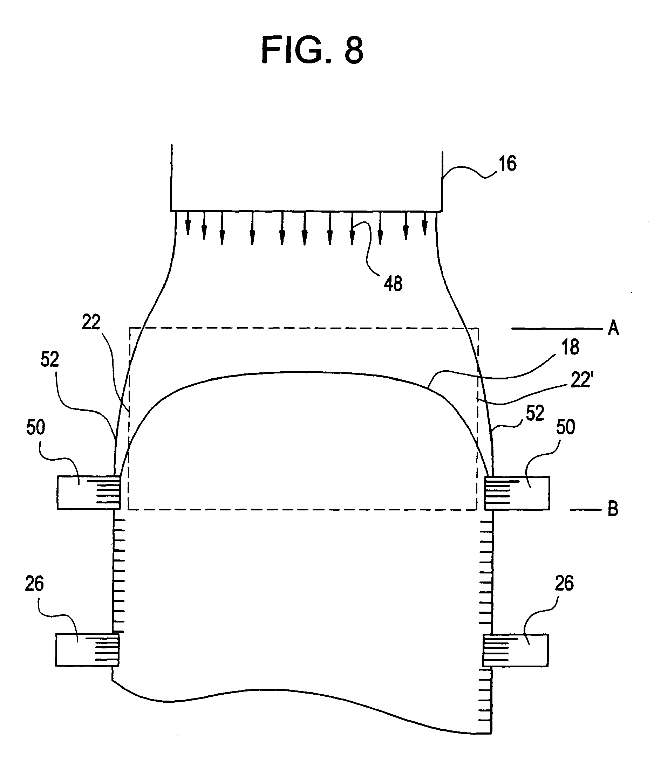

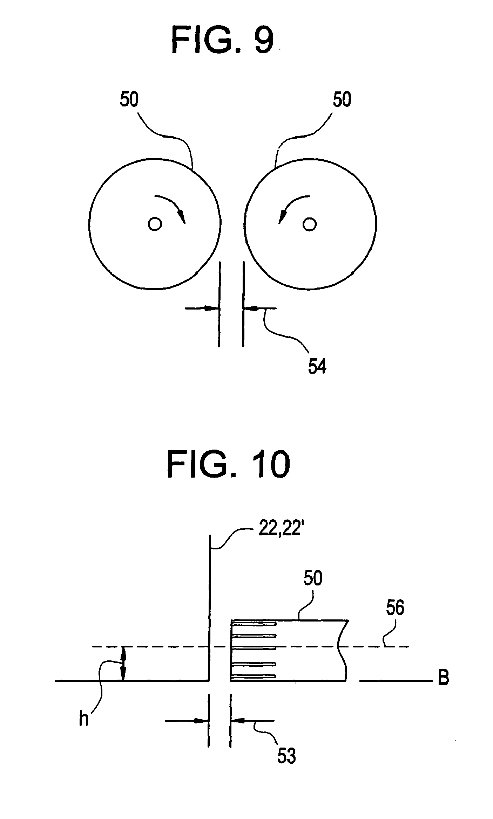

In still another embodiment shown in FIG. 8, a set of auxiliary rollers **50** are included proximate reservoir outlet position **B,** rollers **50** being positioned at a point approximately equal to the level of the reservoir outlet to control the flow of glass-based material **10** (portion **52)** which may be flowing outside the side edges **22, 22'** of the walls (and therefore reservoir **24)** in the present embodiment. Moreover, auxiliary rollers **50** may be used to heat or cool the edges of the sheet of glass-based material **10** outside the side edges **22, 22'** of the reservoir (portion **52),** thereby controlling the viscosity of portion **52.** Auxiliary rollers **50** may be cooled by supplying auxiliary rollers **50** with a coolant. Preferably, auxiliary rollers **50** have at least one channel within each roller for flowing a coolant therethrough. Cooling portion **52** of the glass-based material by the auxiliary rollers may enable the edges of the material to form a high-viscosity frame which aids in the thinning of the sheet as the sheet travels between auxiliary rollers **50** and edge rollers **26.** Auxiliary rollers 50 may facilitate the application of increased shear stress on the sheet without a reduction in the width of the sheet. Preferably, edge rollers **26** are cooled in a manner similar to the cooling of the auxiliary rollers. Preferably, distance **54** (FIG. 9) between the closest portions of opposing auxiliary rollers **50** is between about 0.1 and 1.5 mm less than gap **14** between walls **12** at a height **h** (FIG. 10) from reservoir outlet position **B,** where **h** is equal to the height of the axis of rotation **56** of the auxiliary rollers (the axis of rotation of a set of auxiliary rollers preferably being on a common plane). That is, gap **14** at a vertical location equal to the location of axis **56** above outlet position **B** is preferably between about 0.1 and 1.5 mm larger than distance **54.**

The auxiliary rollers may be operated in either of two modes. A first mode wherein the distance between opposing rollers is constant, thereby facilitating a constant edge thickness for the glass sheet exiting the reservoir, or a second mode wherein the distance between the edge rollers may vary during the draw process such that a constant pressure is applied to the edges of the glass sheet. It is preferable that distance 53 between auxiliary rollers **50** and side edges **22, 22'** of walls **12** is between about 2 mm to 5 mm, as shown in FIG. 10. The linear speed of auxiliary rollers **50,** that is, the speed of an auxiliary roller at a tangent to the circumference of the roller, is dependent upon the desired thickness of the glass sheet drawn from the reservoir. However, the linear speed of the auxiliary rollers **50** typically ranges from about 5% less than the first set of edge rollers **26** after outlet position **B** to about 20% less.

Thus, at any given time a volume of glass-based material which is disposed within a first, predetermined volume of reservoir **24** at a medial region of the reservoir (the volume of the reservoir extending vertically from the inlet of the reservoir to the outlet of the reservoir and across a given width) is greater than a volume of material **10** disposed within a second, predetermined volume of reservoir **24** located adjacent the side edges of the reservoir, wherein the second volume is equal to the first volume. More simply put, the head of glass is greater in a medial portion of the reservoir than at the edges of the reservoir. As shown, the volume of glass-based material is greater within the medial portion of the reservoir than adjacent the edges of the reservoir.

The required pulling force of the edge rollers and/or auxiliary rollers may also be varied by modifying gap **14,** such as by decreasing the overall gap, thus increasing the required pulling force. The pulling force may be varied by changing the inclination of side walls **12** relative to vertical axis X-X' (increasing the angle of inclination increases the required pulling force).

At the end of the process of the invention as described above, a solid sheet **60** is finally obtained from the final set of edge rollers at position **C,** glass sheet 60 having a predetermined thickness preferably less than about 3 mm; more preferably less than 1 mm. The method and apparatus of the invention may be used to manufacture flat sheets having a high surface quality from any glass-based material. The preferred materials are glasses and glass-ceramics with very high strain points for display applications, alkali-free glasses, and glasses and/or glass-ceramics which have special dielectric properties at high temperature.

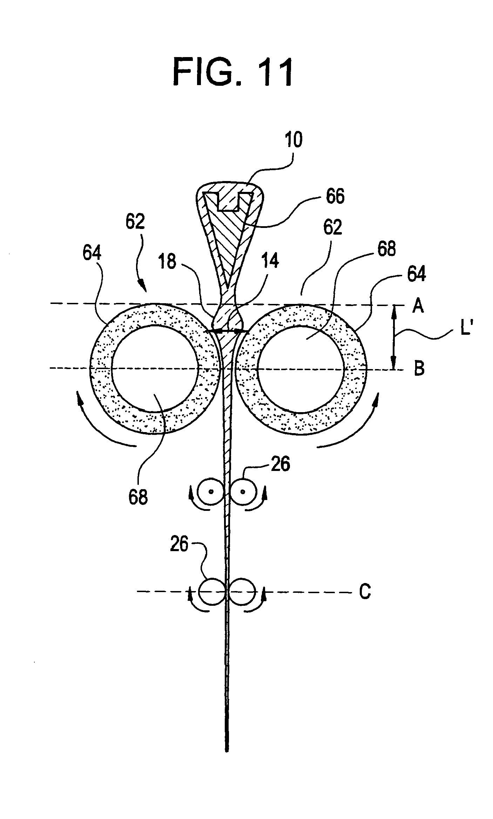

In another embodiment according to the present invention and depicted in FIG. 11, the angled, generally stationary reservoir walls of the previous embodiment may be replaced with two rotating cylinders **62,** or drums, the cylindrical walls **64** of which may be formed of the same porous materials as described in the previous embodiment, e.g. graphite, ceramic, etc. Preferably, the cylinders are in an opposed, counter-rotating relationship. Although FIG. 11 shows the cylinders rotating such that their motion at the reservoir outlet is downward, the cylinders may be rotated such that their motion at the reservoir outlet is upward. The length **L'** of the reservoir extends from the top of the cylinders to a point midway along the vertical diameter of the cylinders, between the reservoir inlet at level A and the reservoir outlet at level **B.** As in the previous embodiment, the glass-based material which flows into the reservoir is prevented from contacting the cylinders by a film of gas. The gas film is formed by injecting a suitable gas **30** into the hollow interiors **68** of the cylinders. Gas **30** exits the cylinders through the porous walls of the cylinders to form a cushion between the glass flowing through the reservoir and the outside surface of the cylinder walls. Gap **14** between the reservoir (cylinder walls) from level **A** to level **B** varies along length **L,** getting smaller in a direction from the top of the reservoir to the bottom of the reservoir. In the present embodiment, the variation in gap **14** from the top of the reservoir **24** to the bottom of reservoir **24** varies nonlinearily.

Advantageously, the use of rotating cylindrical walls for reservoir **24** minimizes structural variations in the walls and therefore minimizes deformations in the reservoir shape due to temperature gradations. The thermal stresses which may develop in rotating cylindrical walls are cylindrically distributed, making deformation of the cylindrical walls less likely than in the walls of the previous embodiment.

Also as in the previous embodiment, gap **14** may vary across reservoir width **W** as well, wherein the regions of the cylinders adjacent the cylinder edges may be beveled slightly such that gap **14** between the cylinders is greater adjacent the cylinder edges than within a median region of width **W.** The gap variation may be similar to the gap variation in the previous embodiments.

As described previously, glass-based material **10** may be fed into reservoir **24** by isopipe **66,** or the glass-based material may provided by other means, such as a slot feeder, as shown in FIG. 1 for example, or an overflow trough (wherein the glass-based material overflows only a single side of the trough). Other delivery systems are also possible, such as delivery from a cylindrical pipe. However, delivery from a cylindrical pipe is less preferred, as the method makes it more difficult to attain a consistent flow across the width of the reservoir.

Of course, the invention is in no way limited to the embodiments described and illustrated above, which descriptions and illustrations have been given only as purely illustrative and non-limiting examples of the invention.

Thus, for example, the gas used to generate the film of gas can be any gas other than air, nitrogen or helium, and the porous material for obtaining the porous walls of reservoir **24** is not limited to graphite, a porous stainless steel, a nickel alloy or a porous ceramic.

Also, although the device of the invention has been shown in the figures with reservoir **24** having a horizontal cross-section whose width (i.e. gap **14)** decreases continuously from the inlet of the reservoir to the outlet of the reservoir, reservoir **24** can consist of a first, upper portion having a constant cross-section along a portion of the path of the glass-based material, followed by a second, lower portion having a decreasing cross-section along a flow path of the material. The converse arrangement can also be used, where appropriate. Likewise, it is possible to use a combination of these two arrangements in which the portion having a decreasing cross-section is preceded and followed by a portion of constant cross-section. Similarly, the device of the invention may comprise several portions having a decreasing cross section.

### EXAMPLE

A glass flow of 2 kg/hour/cm was established from a delivery system slot. The delivered glass had a viscosity of 1,500 poises. The glass was delivered to a hollow reservoir comprising 2 graphite walls, each graphite wall being backed by a gas-tight enclosure. The gas tight enclosure was fed with nitrogen at a pressure of 6.5 atmospheres. Each graphite wall had an inclination of 15° from the vertical axis such that the gap between the walls was larger at the top of the side walls than at the bottom of the walls. The opposing surfaces of the walls varied across the width of the side walls such that the gap at the outside edges of the walls was greater than the gap at a medial position between the walls, with the gap being approximately 1.5 mm larger at the horizontal side edges of the walls than at a median position therebetween. The graphite walls were maintained at a temperature of about 450°C by cooling the gas delivered to the gas tight envelope. A glass sheet having a viscosity of approximately 50,000 to 100,000 poises was drawn from the outlet of the reservoir. Glass sheet was formed having thicknesses of between 1 mm and 2.2 mm.

It will be apparent to those skilled in the art that various other modifications and variations can be made to the present invention without departing from the spirit and scope of the invention. Thus it is intended that the present invention cover the modifications and variations of this invention provided they come within the scope of the appended claims and their equivalents.

## Claims

1. A method of drawing flat sheets of a glass-based material
comprising:
flowing the glass-based material into and through a reservoir between two porous walls, the reservoir having a vertical length, a horizontal width and including a gap between the walls which varies along the vertical length of the reservoir, the material being separated from the walls by a gas film;
drawing the glass-based material in a sheet from an outlet of the reservoir; and
wherein the drawn glass-based material has a viscosity less than about 10⁷ poise at an outlet of the reservoir.

2. The method according to claim 1, wherein the drawn glass-based material has a viscosity less than about 500,000 poise at the reservoir outlet.

3. The method according to claim 1 or 2, wherein the drawn glass-based material has a thickness less than about 1 mm.

4. The method according to claim 1 or 2, wherein the drawn glass-based material has a thickness less than about 150 µm.

5. The method according to any preceding claim, wherein the gas film is formed by flowing a gas through passages in the porous walls.

6. The method according to claim 5 wherein the passages vary in size.

7. The method according to claim 6 wherein the passages increase in size in a direction of flow of the glass-based material along the vertical length of the reservoir.

8. The method according to any preceding claim, wherein the gap varies across the horizontal width of the reservoir.

9. The method according to claim 2 wherein the gap is larger at a vertical edge of the reservoir than at a medial portion of the reservoir.

10. The method according to any preceding claim, wherein a flow rate of the glass-based material varies across the width of the reservoir.

11. The method according to any preceding claim, wherein the step of flowing further comprises flowing the glass-based material along and outside a vertical edge of the reservoir.

12. The method according to claim 11 wherein the glass-based material flowing outside the vertical edge of the reservoir is pulled by an auxiliary roller, the auxiliary roller having an axis of rotation which is no more than about 10 mm below the reservoir outlet.

13. The method according to any preceding claim, wherein the reservoir walls are formed by two rotating cylinders.

14. An apparatus for drawing flat sheets of a glass-based material comprising:
a reservoir comprising two porous walls, the walls defining a gap between the walls within which the glass-based material can accumulate and through which it can flow, the gap varying over at least a portion of a vertical length of the reservoir; and
wherein the apparatus includes an auxiliary roller rotatably mounted adjacent to a vertical edge of the reservoir.

15. The apparatus according to claim 14, wherein the walls comprise graphite.

16. The apparatus according to claim 14, wherein the walls comprise a ceramic material.

17. The apparatus according to any one of claims 14 to 16, wherein the gap decreases along at least a portion of the length of the reservoir, from the top of the reservoir to the bottom of the reservoir.

18. The apparatus according to any one of claims 14 to 17, wherein the walls comprise in their structure passages for enabling a gas to be delivered to the walls.

19. The apparatus according to any one of claims 14 to 18, further comprising an envelope enclosing at least a portion of each wall and into which a pressurized gas is fed.

20. The apparatus according to any one of claims 14 to 19, wherein the gap varies across a width of the reservoir.

21. The apparatus according to any one of claims 14 to 20, wherein an axis of rotation of the auxiliary roller is no more than about 10 mm below an outlet of the reservoir.

22. The apparatus according to any one of claims 14 to 21, wherein the walls comprise a rotating cylinder.
